# EUROPEAN PATENT SPECIFICATION

(11) **EP 2 151 316 B1**
(45) Date of publication and mention of the grant of the patent: **06.06.2012**
(21) Application number: 08290740.3
(22) Date of filing: 31.07.2008
(51) Int. Cl.: B32B 3/28, B32B 27/28, B32B 7/14, F16L 59/06, F16L 59/08, B32B 37/12, B32B 3/24, B32B 27/08, B32B 27/10, B65D 81/38

(54) **Multi-film structures for thermal insulation**
Mehrfilmstrukturen für die Wärmeisolierung
Structures multi-films pour l'isolation thermique

(43) Date of publication of application: 10.02.2010
(73) Proprietor: E.I. DU PONT DE NEMOURS AND COMPANY, Wilmington, DE 19898 (US)
(72) Inventor: Trouilhet Yves, 1222 Vesenaz, Suisse (FR); Quenedey Jean Patrice, 75013 Paris (FR); Andre, Jacques, 74100 Annemasse (FR); Jacques Grégoire, 1268 Begnins (CH); Robin, Nicolas, 01170 Gex (FR)
(74) Representative: Hirsch, Marc-Roger

(56) References cited:
- WO-A-93/02853
- US-A- 6 165 610

## Description

### Field of Invention

The present invention relates to multi-film structures which are designed for applications where thermal insulation is needed.

### Description of the Related Art

Conventional containers used for the transportation of perishable products are based on molded expanded polystyrene. Such materials are not convenient for storage due to their non compressibility.

WO 02/49927 describes a multi-film structure composed of a plurality of baffle films that are bonded together in a way that, upon inflation, forms a shipping container liner providing heat insulation. The plurality of baffle films are heat sealed together at predetermined positions so as to provide individual baffle chambers that can be filled with gases, each having a metallized surface in order to address radiation heat transfer and thus improving thermal insulation. The disclosed baffle films are made of a heat sealable polyolefin based material and comprise stripes made of metal. Since adhesion between the metal and the polyolefin based material is low, the baffle chambers of the multi-film structure are obtained by heat sealing two or more baffle films on the non-metallized surfaces along linear portions of the structure. This requires a precise alignment of the different baffle films when heat sealing is performed with sealing jaws. A constant realignment of the baffle films is needed due to the dimensional changes, like shrinkage, when sealing of the multi-film structure. Misalignment of the metal stripes with the sealing jaws causes poor adhesion and waste.

In order to maintain the gases within the baffle chambers after inflation, the plurality of assembled baffle films must be sealed in contour so as to form a closed envelope structure. Nevertheless, the multi-film structure cannot be heat sealed to form the closed envelope structure due to the low adhesion between the metal and the polyolefin based material. This drawback leads to the requirement of having a metal-free surface that extends around the periphery of the baffle films that have been previously assembled through linear portions by heat sealing. To form this metal-free peripheral surface, the baffle films must be cut and withdrawn in the zones where sealing is applied.

This operation slows the manufacturing process and causes waste.

WO 93/02853 discloses a multi-film structure comprising:
a) ten to fourteen flexible baffle films including a thermoplastic layer made of a thermoplastic polymer, such as polyester, polypropylene, polyvinylchloride and polyethylene, the flexible baffle films further comprising a metal or metal oxide layer deposited onto the thermoplastic layer, and
b) two external layers, the baffle films and the external layers being bonded together through an adhesive material at predetermined and selective locations so as to form cells within the multi-film structure.

There is a current need for heat sealable and heat insulating multi-film structures that have a good heat barrier performance and that can be manufactured in an easy way and with reduced waste.

### Summary of the invention

It has been found that the above mentioned problems can be overcome by a multi-film structure comprising:
a) at least one flexible baffle film including at least one thermoplastic layer made of one or more ethylene acid copolymers and/or ionomers thereof, the flexible baffle film further comprising a metal or metal oxide layer deposited onto the at least one thermoplastic layer, and
b) at least one external layer,
the at least one baffle film and at least one external layer being bonded together through an adhesive material at predetermined and selective locations so as to form cells within the multi-film structure.

In a second aspect, the invention provides lamination processes to manufacture a multi-film structure made of at least one flexible baffle film and at least one external film.

If compared with the structures of the state of the art, the multi-film structures of the present invention have a good heat barrier performance as well as a good resistance to the deterioration or the delamination of the structure upon use and time. Moreover, the multi-film structures of the present invention can be manufactured in an easy way, at a higher manufacturing rate, at a lower cost and with reduced waste.

Figure 1. Schematic representation of the cross-section of a manufacturing machine to prepare multi-film structure according to the present invention wherein the at least one flexible baffle film and the at least one external film are bonded together by extrusion lamination in stripes.

Figures 2A and 2B. Schematic representation of a roll with helicoidal grooves.

Figures 3A and 3B. Schematic representation of a roll with shoulders.

Figure 4. Schematic representation of the cross-section of a multi-film structure according to a preferred embodiment of present invention.

Figure 5. Schematic representation of the cross-section of a multi-film structure according to a preferred embodiment wherein the structure has a honeycomb structure.

### DETAILED DESCRIPTION OF THE INVENTION

Provided herein is a multi-film structure comprising at least one flexible baffle film and at least one external film and wherein the different layers are bonded together at predetermined and selective locations

The different layers are bonded together through an adhesive material that adheres to the at least one flexible baffle film and the at least one external film. The adhesive material is in a liquid or molten state at the processing temperature for bonding the different films and is in a solid state after having assembled the different films and having thus formed the multi-film structure. Preferably, the adhesive material is a polymeric material and more preferably, the adhesive material is one or more ethylene acid copolymers and/or ionomers thereof such as those described hereafter for the at least one thermoplastic layer but having a melt index between 10 to 500 grams/10 min and preferably from about 50 to 70 grams/10 min, as measured by ASTM Method No. D1238 at 190°C using a 2160 g weight. Ethylene acid copolymers and/or ionomers thereof are preferred adhesive materials used to bond together the different layers because this leads to high and maintained adhesion upon time and use due to inter-diffusion of compatible materials.

The design, the shape and the size of the regions wherein the different films are bonded together is not limited and is chosen according to the specific end-use application. The bonding between the different films is achieved by applying the polymeric material to the different layers and then putting into contact the different films and bonding the different layers together at predetermined and selective locations by any means commonly known in the art.

The flexible baffle films used in the present invention have been developed with the aim of reducing heat leak and providing excellent insulating effects. Indeed, metallized surfaces are known to minimize heat transfer by radiation.

Metallized films can be produced by conventional methods such as, for example, sputtering, electron beam heating, ion plating and direct vacuum metallization processes. In general, processes that are conducted under vacuum are preferred for use herein.

Particularly preferred is a vacuum metallization process in which a substrate, generally a polymeric layer, is introduced into a vacuum chamber, and vaporized metal is deposited onto the substrate's surface. Such a method may be carried out in a conventional metallizer, which typically consists of a chamber divided into two sections, both of which are evacuated to a pressure that is less than atmospheric pressure. In general, a vacuum between 10⁻² and 10⁻⁶ bar is used, preferably between 10⁻³ and 10⁻⁴ bar.

The at least one flexible baffle film used in the present invention comprises a metal or metal oxide layer (referred here below as "metallic layer") deposited onto at least one thermoplastic layer. The amount or extent to which a substrate has been metallized is usually determined indirectly by measuring the optical density of the metallized substrate. Optical density refers to the ratio of the intensity of light that is transmitted through a test specimen to the intensity of light that is incident upon the test specimen, under specific conditions. Optical density is reported herein as the logarithm (base 10) of this ratio. For example, an optical density of 1 indicates that the intensity of the transmitted light is one tenth (¹/₁₀ or 0.1) of the intensity of the incident light, and a value of 2 indicates that the intensity of the transmitted light is one hundredth (¹/₁₀₀ or 0.01) of the intensity of the incident light. The at least one flexible baffle film described herein comprises a metallic layer deposited onto the at least one thermoplastic layer to produce a metallized film that has an optical density of about 3 or less, alternatively about 2.6 or less, about 2.4 or less, or about 2.2 or less.

Preferably, the metallic layer comprises one or more metals chosen from the group consisting of aluminum, iron, copper, tin, nickel, silver, chromium and gold and more preferably it comprises aluminum and still more preferably it consists essentially of aluminum.

The metallic layer of the at least one baffle film used in this invention may be treated to improve its adhesion to other layers by means of techniques including, without limitation, corona discharge, plasma treatment, flame treatment or any process commonly known in the art.

The at least one thermoplastic layer that is made of one or more ethylene acid copolymers and/or ionomers thereof confers to the multi-film structure according to the present invention a high adhesion between the metallic layer and the at least one thermoplastic layer thus increasing its strength and durability. By using ethylene acid copolymers and/or ionomers thereof it is possible to have low seal initiation temperatures which allow for or permit increased line speeds, as well as producing strong and reliable heat seals. Preferably, the thickness of each of the at least one thermoplastic layer described above is between 3 and 100 µm and more preferably between 5 and 20 µm.

Ethylene acid copolymers comprise copolymerized residues of ethylene and of one or more α,β-ethylenically unsaturated carboxylic acids comprising from 3 to 8 carbon atoms. Acrylic acid and methacrylic acid are preferred acid comonomers. The ethylene acid copolymers may optionally contain a third, softening monomer. This "softening" monomer decreases the crystallinity of the ethylene acid copolymer. Suitable "softening" comonomers are selected from alkyl acrylates and alkyl methacrylates, wherein the alkyl groups have from 1 to 8 carbon atoms.

The ethylene acid copolymers can thus be described as E/X/Y copolymers, wherein E represents copolymerized units of ethylene, X represents copolymerized units of the α,β-ethylenically unsaturated carboxylic acid, and Y represents copolymerized units of the softening comonomer. The amount of X in the ethylene acid copolymer is from about 1 to about 20, preferably 8 to 20, more preferably 9 to 15 wt%, and the amount of Y is from 0 to about 30 wt%, preferably from 2 to 15 wt%, and more preferably 4 to 12 wt%, based on the total weight of the ethylene acid copolymer. The remainder of the copolymer comprises or consists essentially of copolymerized residues of ethylene.

Preferred are ethylene acid copolymers in which Y is 0% of the copolymer. That is, E/X dipolymers that consist essentially of copolymerized residues of ethylene and of one or more α,β-ethylenically unsaturated carboxylic acids comprising from 3 to 8 carbon atoms are preferred. Specific examples of these preferred ethylene acid copolymers include, without limitation, ethylene/acrylic acid and ethylene/methacrylic acid dipolymers. In addition, the melt flow index of the suitable ethylene/acid dipolymers is between 1 to 500 grams/10 min, preferably from about 2 to 60 grams/10 min more preferably 3 to 5 grams/10min, as measured by ASTM Method No. D1238 at 190°C using a 2160 g weight. Furthermore, suitable ethylene/acid dipolymers have a melting point between 80 and 110°C, preferably between 85 and 95°C, as measured by ASTM Method No. D3418.

Methods of preparing ethylene acid copolymers are known. Ethylene acid copolymers with high levels of acid (X) can be prepared in continuous polymerizers by use of "co-solvent technology" as described in U.S. Patent No. 5,028,674 or by employing somewhat higher pressures than those at which copolymers with lower acid can be prepared. In addition, ethylene acid copolymers suitable for use in the multilayer film structures described herein are commercially available under the trademark Nucrel® from E. I. du Pont de Nemours and Company of Wilmington, Delaware, U.S.A.

The term "ionomers", as used herein, refers to ethylene acid copolymers in which at least some of the carboxylic acid groups in the copolymer are neutralized to form the corresponding carboxylate salts. Suitable ionomers can be prepared from the ethylene acid copolymers described above.

More specifically, compounds suitable for neutralizing an ethylene acid copolymer include ionic compounds having basic anions and cations such as alkali metal cations (e.g. lithium or sodium or potassium ions), transition metal cations (e.g. zinc ion) or alkaline earth metal cations (e.g. magnesium or calcium ions) and mixtures or combinations of such cations. Ionic compounds that may be used for neutralizing the ethylene acid copolymers include alkali metal formates, acetates, nitrates, carbonates, hydrogen carbonates, oxides, hydroxides or alkoxides. Other useful ionic compounds include alkaline earth metal formates, acetates, nitrates, oxides, hydroxides or alkoxides of alkaline earth metals. Transition metal formates, acetates, nitrates, carbonates, hydrogen carbonates, oxides, hydroxides or alkoxides may also be used. Preferred neutralizing agents are sources of sodium ions, potassium ions, zinc ions, magnesium ions, lithium ions, transition metal ions, alkaline earth metal cations and combinations of two or more thereof.

In ionomers suitable for use in the flexible baffle films described herein, the acid moieties are neutralized to a level of from 1.0 to 99.9 equiv%, preferably from 20 to 75 equiv% and still more preferably from 20 to 40 equiv%. The amount of neutralizing agent(s) capable of deprotonating a targeted amount of acid moieties in the ethylene acid copolymer may be determined by simple stoichiometric calculation. Thus, in a relatively simply process, sufficient basic compound is made available so that, in aggregate, the desired level of neutralization can be achieved. The neutralization reaction may be carried out in any apparatus suitable for making a polymer blend, for example in an extruder.

In addition, the melt flow index of the suitable ionomers is between 1 to 15 grams/10 min, preferably from about 3 to 6 grams/10 min, as measured by ASTM Method No. D1238 at 190°C using a 2160 g weight. Furthermore, suitable ionomers have a melting point between 80 and 110°C, preferably between 85 and 95°C, as measured by ASTM Method No. D3418.

Finally, suitable ionomers and methods of manufacturing ionomers are described further in U.S. Patent No. 3,264,272, for example. Ionomers suitable for use in the multilayer film structures described herein are also commercially available from E.I. du Pont de Nemours and Company of Wilmington, Delaware, U.S.A under the trademark Surlyn®.

The at least one flexible baffle film comprising at least one thermoplastic layer can be manufactured by conventional processes such as for example blown film extrusion, cast film extrusion or cast sheet extrusion.

According to another embodiment, the at least one baffle film used in the present invention can consist of at least three co-extruded layers. The first co-extruded layer is adjacent to the metal layer and is made of one or more ethylene acid copolymers and/or ionomers thereof; the second co-extruded layer is adjacent to the first co-extruded layer and consists essentially of a polymer chosen among polyethylene (PE), polypropylene (PP), polyester, polyamide (PA), ethylene vinyl acetate (EVA), ethylene methyl acrylate (EMA), ethylene butyl acrylate (EBA), ethylene ethyl acrylate (EEA), polystyrene (PS) and blends thereof, and the third co-extruded layer is adjacent to the second co-extruded layer and comprises one or more ethylene acid copolymers and/or ionomers thereof. Should the adhesion between any two of these layers be insufficient, one or more tie layers can be added between them.

The least one external layer protects the baffle film(s). The at least one external layer may be a monolayer or may be a multilayer. The at least one external layer is facing the environment. The at least one external layer may be a polymeric film, a paper layer, a paperboard, a metal foil or a net.

The external layer may be made out of a porous material or it may be made out of a non-porous material. Porous external layers are breathable if needed for certain applications or if porosity makes it easier to separate the different layers when pulling away (apart) the outermost external layers. Examples of porous materials include paper, a paperboard, a non-woven material or a net made of glass fibers. With the aim of maintaining the insulation performance over time and upon use, it is generally desirable that the at least one external layer be made of a non-porous material so as to maintain gas pressure when the multi-film structure has been inflated. Examples of non-porous materials include metal foils and polymers that are sealable on the flexible baffle film such as for example ethylene acid copolymers and/or ionomers thereof, polyethylene (PE), polypropylene (PP), polyester, polyamide (PA), ethylene vinyl acetate (EVA), ethylene methyl acrylate (EMA), ethylene butyl acrylate (EBA), ethylene ethyl acrylate (EEA), polystyrene (PS) and blends thereof.

With the aim of further improving the gas-barrier properties of the multi-film structure according to the present invention so that heating insulation performance is maintained upon use and time, at least one external layer made which is a multilayer can be used. Examples of external layers being a multilayer are structures comprising an outermost layer facing the environment, at least one barrier layer and one sealant layer facing the at least one baffle film described above. The at least one barrier layer confers to the structure a low gas transmission rate. Examples of suitable polymers for the at least one barrier layer include, but are not limited to, ethylene vinyl alcohol polymers (EVOH), polyvinylidene chloride (PVDC), silicon oxide and polyamides (PA). Examples of suitable polymers for the sealant layer include polymers that are sealable on the at least one baffle film and are described for the at least one thermoplastic layer of the baffle film described above, e.g., ethylene acid copolymers and/or ionomers thereof. Examples of suitable polymers for the outermost layer include polyethylene, polypropylene, polyamides and polyesters. Should the adhesion between the outermost layer, the barrier layer or the sealant layer be insufficient, one or more tie layers such as for example co-extrudable Bynel^{®} tie resins from DuPont (Wilmington, USA) can be added between any two of layers or films. According to a preferred embodiment of the invention, the multi-film structure comprises two external layers and from one to fifteen flexible baffle films sandwiched in between. More preferably it comprises two external layers and from one to nine flexible baffle films sandwiched in between and still more preferably two external layers and from one to three flexible baffle films sandwiched in between. Still more preferably, each external layer is a multilayer comprising an outermost layer made of polypropylene (PP), a tie layer, a barrier layer made of ethylene vinyl alcohol polymers (EVOH), a tie layer and a sealant layer made of one or more ethylene acid copolymers and/or ionomers thereof.

The at least one external layer used in this invention may be printed. Printing thermal insulating materials could be useful in order to provide information about the product and/or to provide a pleasing appearance of the structure. By "printed", it is meant impressed with a "mark, design, lettering or pattern". The mark, design, lettering or pattern may be coloured or uncoloured, thus printing includes visibly marking and also embossing, treating, and the like. The choice of ink and printing may be made by one of the skill in the art according to established criteria such as economic factors, compatibility of ink with the structure, level of detail of the design to be printed and the like.

Preferably, the thickness of the at least one external layer described above is between 25 and 200 µm.

After having prepared the at least one flexible baffle film and the at least one external layer as described above, the films are bonded together at predetermined and selective locations. Preferably, the metallic layer of the at least one flexible baffle film is oriented towards the at least one external layer.

Preferably, the adhesive strength between the at least one flexible baffle film and the at least one external layer where they are bonded together is at least 4 N/15mm. As used herein, the term "adhesive strength" refers to the magnitude of the force per width of the thermoplastic film that is required to rupture a bonded that is under tension. Accordingly, the adhesive strength is a measure of the ability of the structure described herein to resist the separation of its layers. The adhesive strength may be measured by any means known in the art, and is preferably measured in a tensile tester such as the one available from Zwick Roell, AG, of Ulm, Germany at a pulling angle of 180° and at a head speed of 100 mm/min.

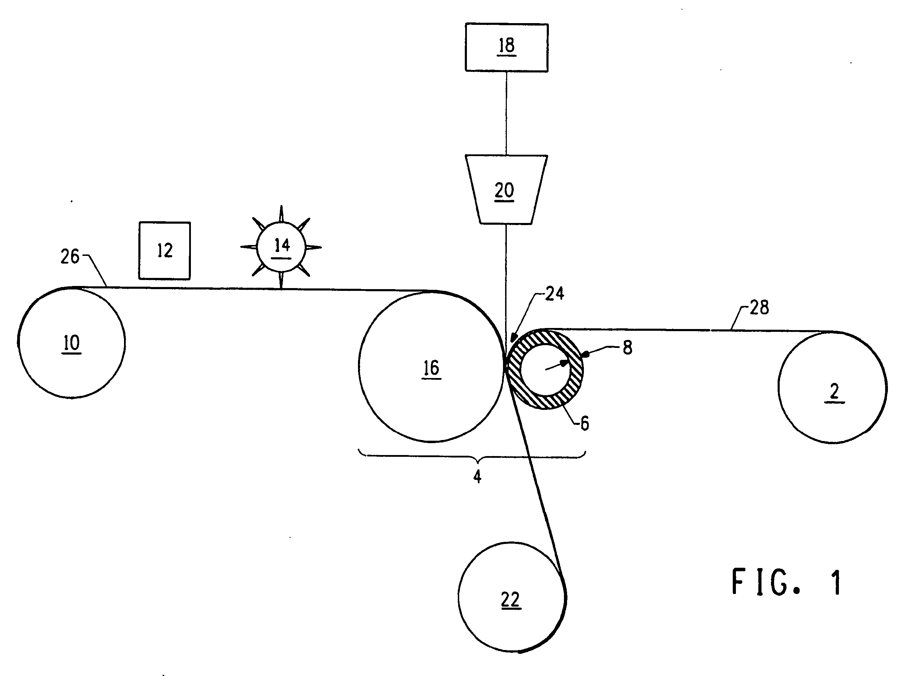

As explained hereafter, if the at least one baffle film and the at least one external layer are bonded together for example by means for example of continuous lines in the final inflatable structure so that the cells do not communicate to each other, one or more of the at least one flexible baffle film may be perforated. Significantly, the perforation of one or more of the at least one baffle film renders the multi-film structure according to the present invention inflatable from any location. The shape of the perforation is not limited. Preferably, the one or more of the at least one flexible baffle film comprises round perforations. Perforation can be achieved by using hot needles. The hot needles melt the film thus forming round perforations having a diameter of about 1 mm, which perforations are surrounded by a circular over-thickness. The perforation step may be done either during the manufacture of the baffle film itself thus providing a perforated film which can be wound and stored. Alternatively, the baffle film may be perforated prior to bonding together the different films by means of a perforator (14) as shown in Figure 1.

According to a preferred embodiment of the invention, the at least one baffle film and the at least one external layer are bonded together by means of stripes of adhesive material. The shape and the orientation of the stripes through which the different films are bonded together are not limited and are designed according to the final specific uses. Stripes, which may be continuous or interrupted, are typically from 1 mm to 10 mm wide and preferably from 3 mm to 6 mm wide. They may be oriented in machine direction or in transverse direction. Preferably, the stripes are oriented in machine direction for fast line-speed applications. The different films are bonded together by spaced stripes and preferably, the distance between each stripe is from 12 mm to 50 mm.

The multi-film structure according to the present invention comprises cells which can be opened or closed. The cells may be flat or expanded. Expansion may be accomplished either by inflating the structure with one or more gases or by separating the different films by pulling away (apart) the outermost external layers.

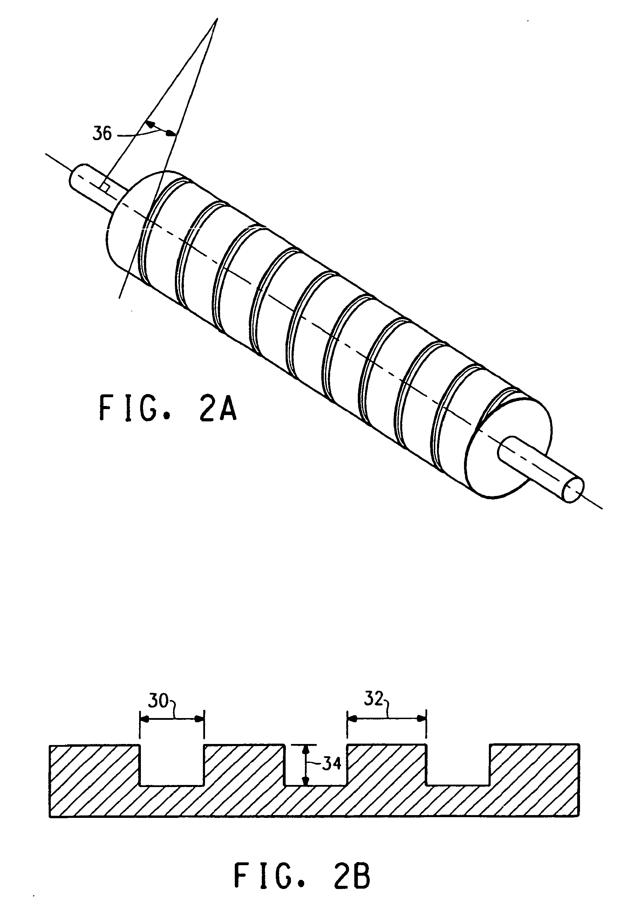

As explained before and in the case wherein the cells do not communicate to each other; different designs or means may be chosen to allow the circulation of the one or more gases throughout the whole structure once inflated, such as for example.
a) the stripes are continuous along their axis and the different films are bonded together through the whole length of the stripes. In such a case, one or more of the at least one flexible baffle film are perforated.
b) the stripes are continuous along their axis but the different films are bonded through these stripes only on selected locations in the direction of the axis of the stripes. In such a case, communication between the cells is achieved by having localized and interrupted adhesion between the different films along the stripes. The bonding of the different films through localized and interrupted adhesion may be achieved by using a specific roll such as for example a roll designed with helicoidal grooves as shown in Figure 2A. Such a roll which comprises helicoidal grooves can be used during the manufacture of a multi-film by extrusion lamination in stripes as shown in Figure 1, wherein roll (6) comprises helicoidal grooves. In addition of having localized and interrupted adhesion between the different films along the stripes, one or more of the baffle films may be perforated for rendering the circulation of the one or more gases throughout the whole structure easier and/or for improving the insulation performance of the multi-film structure.
c) the stripes are interrupted. By "interrupted stripes", it is meant stripes which are not continuous in the direction of their axis. When interrupted stripes are used, communication between the cells is achieved through the interspaces thus created. In addition of having interrupted stripes and interspaces, one or more of the baffle films may be perforated.

When it is preferred that the at least one flexible baffle film and the at least one external layer are bonded together trough stripes, such films are preferably bonded together by extrusion lamination in stripes. Alternatively, the structure can be manufactured by other conventional processes such as for example adhesive lamination in stripes, hot melt lamination in stripes or full width extrusion.

Figure 1 shows a cross-section of an extrusion lamination apparatus that is engaged in carrying out a lamination by stripes process. The multi-film structure according to the present invention may be prepared by a process comprising the steps of a) providing a flexible baffle film, b) providing an external layer, c) bringing the flexible baffle film and the external layer close to each other, d) extruding an adhesive material in form of stripes onto the flexible baffle film and the external on the respective sides facing each others, and e) stripe laminating the flexible baffle film and the external layer by means of the adhesive material. Preferably, the at least one baffle film (26) and at least one external layer (28) are bonded together by a process which involves squeezing molten filaments of an adhesive material between each of the films moving at high speeds (e.g. from about 40 to 300 meter per minute and preferably from about 50 to 120 meter per minute) where they come into contact between two rolls. Preferably, the molten filaments are at a temperature from 150 to 300°C and preferably from 230 to 250°C. The bonding of the at least one baffle film (26) and the at least one external layer (28) together comprises several steps including i) melting the adhesive material in an extruder (18) and pumping it in a die (20) with nozzles or extruding it through a die (20) with nozzles, and ii) putting into contact the two films and the molten adhesive material simultaneously in the laminator (4) and pressing them together in a nip (24) between a cooled metallic roll (16) and a rubber coated roll (6). Preferably, the adhesive material used for the stripes comprises ethylene acid copolymers and/or ionomers thereof as described above for the at least one thermoplastic layer but having a melt index between 10 to 500 grams/10 min and preferably from about 50 to 70 grams/10 min, as measured by ASTM Method No. D1238 at 190°C using a 2160 g weight. When the communication between the cells of the final inflatable structure described hereafter is achieved by using one or more perforated baffle films, the perforation may be done during the manufacture of the baffle film itself or by using a perforator (14) as shown in Figure 1. When the communication between the cells is achieved by bonding the different films together on selected location along the stripes, selected and interrupted adhesion between the films may be obtained by means of a rubber coated roll (6) that preferably comprises helicoidal grooves so as to bond the different films by localized and interrupted adhesion. With reference to Figures 2A and 2B, the nip roll with helicoidal grooves is preferably characterized by having a width of the grooves (30) between 10 and 40 mm, preferably 20 mm; a distance between each groove (32) between 30 and 100 mm, preferably 70 mm; a depth of the grooves (34) between 2 and 10 mm, preferably 5 mm; and an angle of the groove (36) to the axis of the roll between 30 and 80°, preferably 60°.

Adhesive lamination in stripes involves that the at least one baffle film and at least one external layer are bonded together by a process which involves applying stripes of a reactive adhesive on one of the two films. The bonding of the at least one baffle film and the at least one external layer together comprises several steps including i) providing a reactive adhesive which is at a temperature below 50°C and which may comprise a solvent, by pumping onto rolls at the coating station, and ii) pressing the films together through the use of a nip between a metallic roll and a rubber coated roll. When the communication between the cells is achieved by using one or more perforated baffle films, the perforation may be done during the manufacture of the baffle film itself or during the adhesive lamination process. When the communication between the cells is achieved by bonding the different films together on selected location along the stripes, selected and interrupted adhesion between the films is obtained by means of a roll that preferably comprise shoulders so as to apply the reactive adhesive in interrupted adhesion in machine direction on one of the films.

Hot melt lamination in stripes involves that the at least one baffle film and at least one external layer are bonded together by a process which involves laying molten stripes of a hot melt adhesive. The assembling of the at least one baffle film and the at least one external layer together comprises several steps including i) pumping an adhesive which has been previously molten at a temperature between 100 and 230°C in a die for each stripe, ii) coating through the dies the hot melt adhesive between 100 and 230°C either on the external layer or on the baffle film, wherein the exits of the dies are at a distance between 0.1 and 10 mm from the film, and iii) pressing together the different films by means of a nip between a stiff roll and a rubber coated roll. When the communication between the cells is achieved by using one or more perforated baffle films, the perforation may be done during the manufacture of the baffle film itself or during the hot melt lamination process. When the communication between the cells is achieved by using interrupted stripes, an electrovalve may be used to stop the flow of the molten stripes in the die. When the communication between the cells is achieved by bonding the different films together on selected location along the stripes, selected and interrupted adhesion between the films is obtained by means of a nip roll that preferably comprises helicoidal grooves. Such a roll comprising helicoidal grooves is characterized with the same parameters given above.

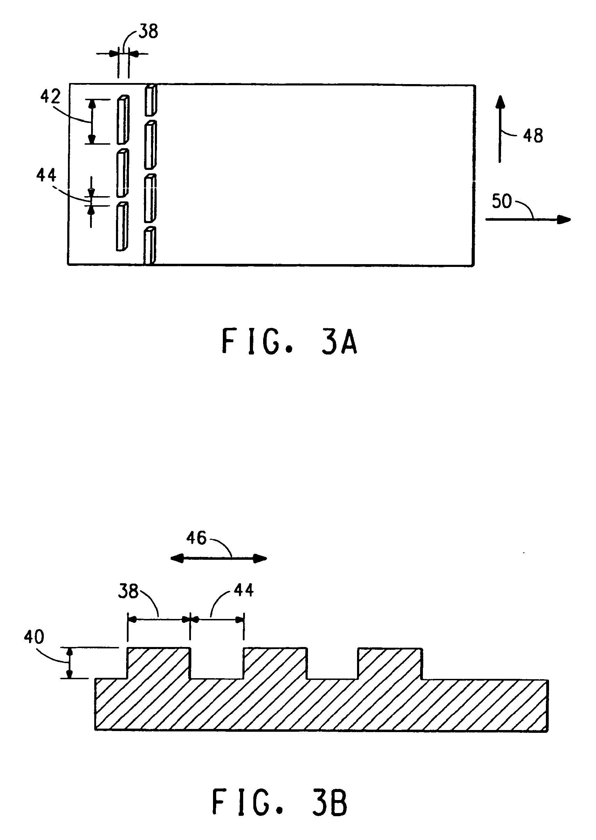

Full width extrusion lamination involves that at least one baffle film and at least one external layer are bonded together by a process which involves laying down a curtain of a thermoplastic composition. The assembling of the at least one baffle film and the at least one external layer together comprises several steps including i) melting the thermoplastic composition and pumping it in a flat die or extruding it in a flat die and ii) putting into contact the two films and the molten thermoplastic composition simultaneously and pressing them together between a cooled metallic roll and the rubber coated roll in a nip, which rubber coated roll comprises shoulders. While only some shoulders are presented in Figure 3A, the roll may comprise shoulders on its whole surface and in any pattern depending on the shape, the size and any characteristic of the stripes. With reference to Figures 3A and 3B, the rubber coated roll comprising shoulders is preferably characterized by having a width of the shoulders (38) between 3 and 8 mm, preferably 5 mm; a height of the shoulders (40) between 3 and 10 mm, preferably 4 mm; a length of the shoulders in machine direction (42) between 50 and 100 mm, preferably 76 mm; and a distance between each shoulders in machine direction (44) between 15 and 50 mm, preferably 38 mm; and a distance between the centre of each shoulder in transverse direction (46) between 10 and 100 mm, preferably between 20 and 40 mm and more preferably 25 mm. Preferably, the thermoplastic composition used for the stripes are made of ethylene acid copolymers and/or ionomers thereof.

Extrusion lamination in stripes is preferred because it leads not only to the best maintained adhesion upon time due to inter-diffusion of compatible materials as described above but also because a high line speed can be achieved. Extrusion lamination is preferred in situations where solvent outgassing, as from by-products of reactive adhesives, would be counterproductive. The need of 1 day to 10 days curing time to develop adhesion may also be a drawback of such a process. Depending on the end-use application, hot melt lamination in stripes may not be a preferred process because of poor adhesion over time due to poor creep performance when submitted to a force. Full width extrusion lamination may not be a preferred process because of the difficulty of controlling the adhesion on predetermined and selective locations, i.e. good adhesion over the shoulders and at the same time poor adhesion besides them. If compared with the process used in the state of the art wherein the different films are bonded together by heat sealing metal-free surfaces along linear portions of the structure, the lamination processes, and especially the extrusion lamination process, allow a strong increase of the manufacturing rate by a factor of at least four times.

Multi-film structures can be produced by repeating the assembly techniques described above, wherein the metallic layer of the additional baffle films is preferably oriented towards the thermoplastic layer of the previously bonded baffle film(s).

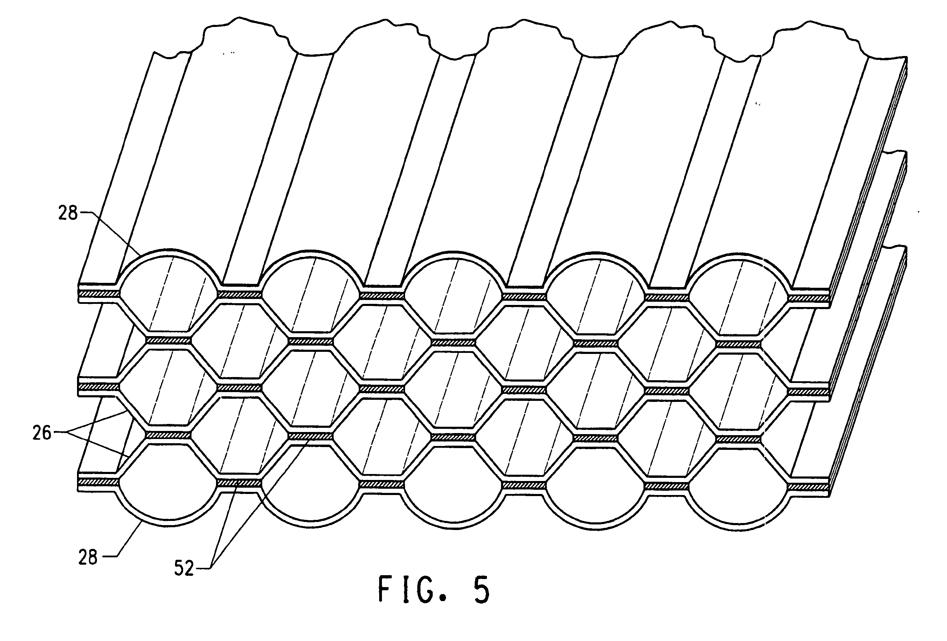

For saving space during storage and for lowering shipping costs, the multi-film structure according to the present invention is wound in a collapsed, uninflated state that can be rolled, easily stored and transported. Depending on the specific application, the multi-film structure according to the present invention comprises cells which can be obtained either by inflating the cells with one or more gases or by separating the different films by pulling away (apart) the outermost external layers. The multi-film structure will be inflated or filled with one or more gases upon requirement to provide desired thermal insulation. Such structures are called heat insulating structures. With the aim of maintaining the insulation performance over time or upon use, it is generally desirable that the at least one external layer is made of a non-porous material so as to maintain gas when the multi-film structure has been inflated. After having separated the at least one external layer or upon inflation or gas filling, the multi-film structure described above has a plurality of individual cells formed between the baffle films or external layers. Preferably, the cells are arranged substantially in a honeycomb structure. As shown in Figure 5, an example of honeycomb structure is obtained by bonding together different and adjacent layers by means of an adhesive material at predetermined and selective locations, preferably the different films being bonded together by means of stripes made of an adhesive material, at laterally offset intervals; the stripes are spaced from each other and placed in an alternating offset relationship to stripes on layers thereabove and/or therebelow. The size of the cells of the heat insulating structure according to the present invention is designed in such a way to meet heat insulation performance. Preferably, the cells of the multi-film structure according to the present invention are small enough so that convection is reduced, which leads to excellent thermal insulation performance. Preferably, the cells have a size between 13 mm and 100 mm and more preferably between 20 and 40 mm. By the "size", it is meant the distance between the films after having applied a force perpendicular to the structure or after having gas filled the cells.

According to a preferred embodiment of the invention, the different layers of the multi-film structure are sealed together so as to form an envelope structure. Before forming filled gas cells, it is required to heat-seal the multi-film structure in contour so as to form a tight and closed envelope that withstands a pressure up to typically 0.2 bars. For this reason, the multi-film structure according to the present invention is heat sealable on its whole surface so that strong seals can be formed around the periphery of the structure. In addition to withstanding pressure, it is desirable that the seals are adequately resistant to deterioration or delamination over time or upon use, i.e. the structure exhibits a seal strength of at least 4 N/15mm. Under "heat sealable structure" it is meant a structure which is typically sealable by applying a pressure ranging between 1.5 and 7 bar, at a temperature above 100°C, and over a period of time between 0.5 s and 4 s.

As used herein, the term "seal strength" refers to the magnitude of the force per width of the thermoplastic film that is required to rupture a seal that is under tension. Accordingiy, the seal strength is a measure of the ability of the structure described herein to resist the separation of its layers. The seal strength may be measured by any means known in the art, and is preferably measured as previously described for the adhesion strength between the at least one flexible baffle film and the at least one external layer where they are bonded together.

According to a preferred embodiment, the heat insulating structure according to the invention is obtained by inflating the cells by one or more gases. Depending on the desired efficiency of thermal insulation, the gas can be chosen among air, carbon dioxide, nitrogen or inert gases such as argon, krypton or xenon. For a given application of the multi-film structure wherein the cells have been filled with a given gas, the heat insulation performance can be tuned by changing the volume of gas. The volume of the gas may be changed by changing the distance between the external layers, or by changing the pressure at which the structure is filled with the gas.

Inflation of the cells of the multi-film structure according to the invention may be done either by making at least one aperture on the at least one external layer of the envelope, inflating by one or more gases and sealing the multi-film structure so as to maintain the one or more gases inside the structure or by a step of sealing a valve and inflating by one or more gases.

The multi-film structure according to the present invention can be used in several applications where thermal insulation is needed. Examples of such applications include, without limitation, packaging insulation of perishable goods, such as frozen food or pharmaceuticals products shipped in containers for transportation; textile insulation, e.g. consumer outdoor recreation equipment (beverage coolers, ice chests, beverage jugs, outdoor recreational tents and sleeping bags, clothing and sportswear such as vests, gloves, shoes, backpacks); helmets and technical textiles; insulation for means of transportation, e. g., trains, ships, planes, automobiles, trucks, recreational vehicles, motor homes, and mobile homes having wheels; insulation of appliances for industrial, commercial or agriculture use; building construction materials, e.g., insulation for walls, roofs, ceilings, foundation floors and outdoor swimming pools; insulation of appliances for residential use, e.g., refrigerators, freezers, and hot water heaters; and insulation of climate conditioning equipment and its associated thermal distribution systems. The multi-film structure according to the present invention confers not only thermal insulation but also protection from mechanical shocks and an efficient barrier to gas, UV radiation and light. Moreover, as mentioned above, the use of thermoplastic layers made of ethylene acid copolymers and/or ionomers thereof in the at least one baffle films confers hot-tack strength to the final packaging and prevents any seal failure after gas flushing to inflate the baffle chambers. The good adhesion between the metal layer, the thermoplastic layer and the stripes as well as the heat sealability of the structure leads to a time and cost effective manufacture and it enables more opportunities for design properties.

The following examples are provided to describe the invention in further detail. These examples, which set forth a preferred mode presently contemplated for carrying out the invention, are intended to illustrate and not to limit the invention.

### EXAMPLES

The following structures were used for preparing multi-film structures according to the present invention:

### 1) Baffle film

A 25 µm ionomer film was produced on a cast film line (Windmoeller & Hoelscher, Germany). The ionomer used to produced the film was a copolymer comprising ethylene and 15 wt-% MAA (methacrylic acid), wherein 23% of the available carboxylic acid moieties were neutralized to form zinc carboxylate groups. This product is supplied by E.I. du Pont de Nemours and Company, Wilmington, Delaware under the trademark Surlyn^{®}. The extruder temperatures were set for five extruder zones of the same length, according to a temperature profile of 160°C, 190°C, 220°C, 240°C and 250°C. The die (2.4 m wide) and the connecting pipes were set at 250°C. The casting rolls were set at 20°C. The line speed was 100 m/min. Two rolls of film were produced at the same time in a width of 1.1 m each and 4000 m long.

The ionomer film was then metallized in a vacuum metallizer (Leybold, Germany) at a speed of 4 m/s and at a roll temperature of -15°C to an optical density of 2.8. The films were then unwound and rewound under atmospheric pressure and at a speed of 100 m/min to avoid rupture due to blocking.

The seal strength to itself of the baffle film was 7 N/15mm when sealing ionomer to ionomer and 5 N/15mm when sealing ionomer to metallization at a temperature of 160°C during 2 s and with a pressure of 3 bar on the seal area.

### 2) External layer

The structure of the co-extruded layer was PP/adhesive/EVOH/adhesive/Surlyn^{®} with thicknesses 35/5/5/5/25 µm respectively (total thickness 75 µm). This layer is available from the company Pliant, USA.

### 3A) Multi-film structure according to the present invention made by extrusion lamination in stripes (external layer/perforated baffle film)

The metallized ionomer film obtained under 1) was perforated with a hot needle perforator PM5 (AFS, Germany) to allow inflation of the structure. The line speed was 100 m/min and the needles were heated at a temperature of about 350°C partly by conduction through the heated ring and partly by an infrared heater. The needles were 2 mm in diameter at a distance of 38 mm in machine direction. The distance in transverse direction between rows of needles was 19 mm and the position was offset by 19 mm in machine direction between two adjacent rows of needles.

The tension at break of the perforated metallized ionomer film was 10 N/15mm at 76% elongation in machine direction and 6 N/15mm at 12% elongation in transverse direction. As a comparison, the tension at break of the non perforated metallized ionomer film was 12 N/15mm at 160% elongation in machine direction and 10 N/15mm at 430% elongation in transverse direction.

The external multilayer film and the perforated baffle film were bonded together by extrusion lamination in stripes on an extrusion coating/laminating pilot line manufactured by Egan, Great Britain at a line speed of 60 m/min.

With reference to Figure 1, a roll of the external multilayer film (28) having a width of 450 mm was unwound from a main unwinder (2) and laid onto a nip (24) of a laminator (4) with the PP layer of the external layer being in contact with a rubber coated roll (6) having a hardness of 90 Shore A, an outer diameter of 166 mm and a rubber thickness (8) of 1 mm.

A roll of the perforated baffle film (26) having a width of 450 mm was unwound from a second unwinder (10), Corona treated by a Corona treater manufactured by Sherman (United Kingdom) (12) at a power of 4.5 kW and laid onto a nip (24) of a laminator (4) with the thermoplastic layer of the baffle film being in contact with a chill-roll (16) having a diameter of 700 mm.

Chill roll (16) and rubber coated roll (6) were kept cooled with water at 15°C throughout the entire process.

An ethylene acid copolymer with 10 wt-% methacrylic acid and 60 MI (2.16 kg, 190C) produced by DuPont de Nemours, Wilmington, USA under the trade name Nucrel^{®} was melted in an extruder (18) having a 25 mm inner diameter manufactured by Betol, Great Britain set at 90 rpm and with an output of 9 kg/hour. The temperatures of extruder (18) were set at 190°C for the feed zone, 230°C for the compression zone and 240°C for the metering zone. The molten ethylene acid copolymer was fed through a low pressure die (20) manufactured by Robatech, Muri, Switzerland set a temperature of 250°C through a flexible and heated hose. The die (20) was located at a distance of about 15 cm above the nip (24) of the laminator (4). The die (20) was equipped with 12 nozzles having an internal diameter of 1 mm and at a distance of 38 mm from each other. The molten filaments of the ethylene acid copolymer flowed vertically out of the nozzles and touched simultaneously the external multilayer film and the perforated baffle film in nip (24). The force of 15000 N applied to nip roll (6) deformed the section of the molten filaments which cooled down and solidified in stripes with a width of 6 mm. The position of the die was adjusted to lay the stripes between the holes of the perforated baffle film.

The multi-film so-obtained was wound onto winder (22) (1000 m of multi-film structure per winder (22)).

3B) Multi-film structure according to the present invention made by extrusion lamination in stripes (external layer/ baffle film) wherein the stripes were continuous and the different films were bonded together on selected location along the stripes.

The external multilayer film and the baffle film were assembled together by extrusion lamination in stripes on an extrusion coating/laminating pilot line manufactured by Egan, Great Britain at a line speed of 60 m/min.

With reference to Figure 1, a roll of the external multilayer film (28) having a width of 500 mm was unwound from a main unwinder (2) and laid onto a nip (24) of a laminator (4) with the PP layer of the external layer being in contact with a rubber coated roll (6) having a hardness of 90 Shore A, an outer diameter of 166 mm and a rubber thickness (8) of 1 mm.

A roll of the baffle film (26) having a width of 450 mm was unwound from a second unwinder (10), Corona treated by a Corona treater manufactured by Sherman (United Kingdom) (12) at a power of 4.5 kW and laid onto a nip (24) of a laminator (4) with the thermoplastic layer of the baffle film being in contact with a chill-roll (16) having a diameter of 700 mm.

Chill roll (16) and rubber coated roll (6) were kept cooled with water at 15°C throughout the entire process.

An ethylene acid copolymer with 10 wt-% methacrylic acid and 60 MI (2.16 kg, 190C) produced by DuPont de Nemours, Wilmington, USA under the trade name Nucrel^{®} was molten in an extruder (18) having a 25 mm inner diameter manufactured by Betol, Great Britain set at 90 rpm and with an output of 9 kg/hour. The temperatures of extruder (18) were set at 190°C for the feed zone, 240°C for the compression zone and 250°C for the metering zone. The molten ethylene acid copolymer was fed through a low pressure die (20) manufactured by Robatech, Muri, Switzerland set a temperature of 250°C through a flexible and heated hose. The die (20) was located at a distance of about 15 cm above the nip (24) of the laminator (4). The die (20) was equipped with 12 nozzles having an internal diameter of 1 mm and at a distance of 38 mm from each other. The molten filaments of the ethylene acid copolymer flowed vertically out of the nozzles and touched simultaneously the external multilayer film and the baffle film in nip (24). The force of 15000 N applied to nip roll (6) deformed the section of the molten filaments which cooled down and solidified in stripes with a width of 6 mm. With the aim of having a structure comprising a baffle film and an external layer that were bonded together through localized and interrupted adhesion along the stripes, a nip roll (6) comprising helicoidal grooves was used. As shown in Figures 2A and 2B, the nip roll comprising helicoidal grooves was characterized by having a width of the grooves (30) of 20 mm, a depth of the grooves (34) of 5 mm, a distance between each groove (32) of 70 mm and an angle of the groove (36) to the axis of 60°. The so-obtained multi-film structure comprised different films that were bonded together with continuous stripes and wherein adhesion between the different films that was localized and interrupted.

The multi-film so-obtained was wound onto winder (22) (1000 m of multi-film structure per winder (22)).

### 4) Multi-film structure according to the present invention made by extrusion lamination in stripes (external layer/baffle film/external layer)

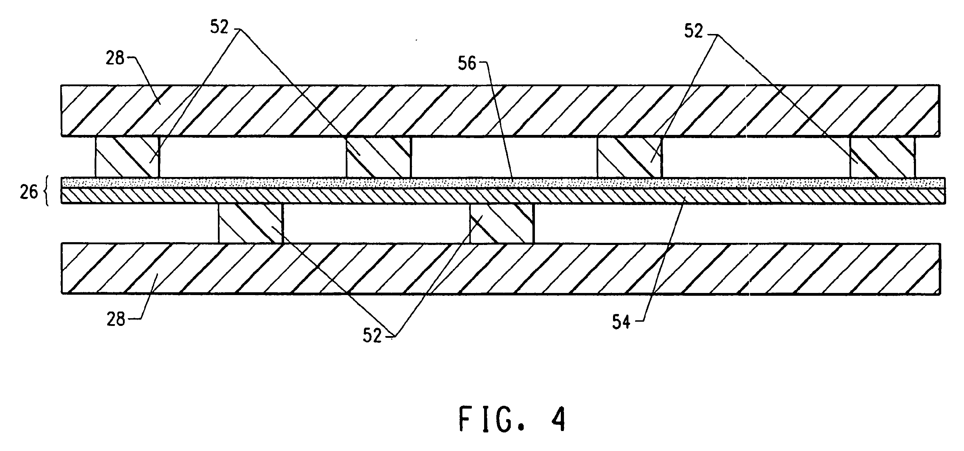

The multi-film structure obtained under 3A) or 3B) was laminated to an additional external layer according to the structure depicted in Figure 4, so as to obtain a flexible baffle film (26) comprising a metallic layer (54) and an thermoplastic layer (56) and two external layers (28) bonded together with stripes (52) thus cells arranged in a honeycomb structure. This multi-film structure with two external layers and one perforated or not perforated baffle film can be produced in one pass on a tandem line having two laminators. Extrusion lamination in stripes can be used to produce rolls of multi-film structures with more than one baffle films by passing several times through the line or having several laminators on the same line.

While certain of the preferred embodiments of the present invention have been described and specifically exemplified above, it is not intended that the invention be limited to such embodiments. It is to be understood, moreover, that even though numerous characteristics and advantages of the present invention have been set forth in the foregoing description, together with details of the structure and function of the invention, the disclosure is illustrative only, and changes may be made in detail, especially in matters of shape, size and arrangement of parts within the principles of the invention to the full extent indicated by the broad general meaning of the terms in which the appended claims are expressed.

## Claims

1. A multi-film structure comprising:
a) at least one flexible baffle film including at least one thermoplastic layer made of one or more ethylene acid copolymers and/or ionomers thereof, the flexible baffle film further comprising a metal or metal oxide layer deposited onto the at least one thermoplastic layer, and
b) at least one external layer,
the at least one baffle film and at least one external layer being bonded together through an adhesive material at predetermined and selective locations so as to form cells within the multi-film structure.

2. The multi-film structure according to claim 1, wherein the at least one baffle film and the at least one external layer are bonded together through an adhesive material comprising one or more ethylene acid copolymers and/or ionomers thereof.

3. The multi-film structure according to any preceding claim, wherein the one or more ethylene acid copolymers and/or ionomers thereof of the at least one flexible baffle film are chosen among one or more of ethylene acrylic acid copolymer, ethylene methacrylic acid copolymer and ionomers of ethylene acrylic acid copolymer or ethylene methacrylic acid copolymer.

4. The multi-film structure according to any preceding claim, wherein the at least one external layer is a polymeric film, a paper layer, a paperboard, a metal foil or a net.

5. The multi-film structure according to any preceding claim, wherein the at least one external layer is made of a multilayer structure.

6. The multi-film structure according to claim 5, wherein the multilayer structure comprises a gas-barrier layer.

7. The multi-film structure according to any preceding claim comprising two external layers and from one to fifteen flexible baffle films sandwiched in between.

8. The multi-film structure according to any preceding claim, wherein the at least one baffle film and the at least one external layer are bonded together trough stripes of adhesive material.

9. The multi-film structure according to claim 8, wherein the stripes are from 1 mm to 10 mm wide and positioned at a distance between each other from 12 mm to 50 mm.

10. The multi-film structure according to any preceding claim, wherein one or more of the baffle films comprise perforation.

11. The multi-film structure according to any preceding claim, wherein the cells are arranged substantially in a honeycomb structure.

12. The multi-film structure according to any preceding claim, wherein the cells have a size between 15 mm and 100 mm.

13. An envelope structure made of the multi-film structure described in anyone of claims 1 to 12.

14. A use of a multi-film structure as **characterized in** any preceding claim for packaging insulation, such as packaging insulation of perishable products, textile insulation, insulation means for transportation, insulation appliances for industrial, commercial or agriculture use, building construction materials, insulation appliances for residential use and insulation climate conditioning equipment.

15. A process for preparing the multi-film structure according to any of claims 1 to 13, comprising the steps of:
a) providing a flexible baffle film including at least one thermoplastic layer made of one or more ethylene acid copolymers and/or ionomers thereof, the flexible baffle film further comprising a metal or metal oxide layer deposited onto the at least one thermoplastic layer,
b) providing an external layer,
c) bringing the flexible baffle film and the external layer close to each other,
d) extruding an adhesive material in form of stripes onto the flexible baffle film and the external layer on the respective sides facing each others, and
e) stripe laminating the flexible baffle film and the external layer by means of the adhesive material.

## Patentansprüche

1. Mehrfilmstruktur, die aufweist:
a) mindestens einen flexiblen Trennwandfilm, der mindestens eine thermoplastische Schicht aus einem oder mehreren Ethylen-Säure-Copolymeren und/oder deren Ionomeren umfasst, wobei der flexible Trennwandfilm außerdem eine Metall- oder Metalloxidschicht aufweist, die auf der mindestens einen thermoplastischen Schicht abgelagert ist; und
b) mindestens eine äußere Schicht,
wobei der mindestens eine Trennwandfilm und die mindestens eine äußere Schicht mittels eines Klebstoffmaterials an vorgegebenen und ausgewählten Stellen miteinander verbunden sind, um so Zellen innerhalb der Mehrfilmstruktur zu bilden.

2. Mehrfilmstruktur nach Anspruch 1, bei der der mindestens eine Trennwandfilm und die mindestens eine äußere Schicht mittels eines Klebstoffmaterials miteinander verbunden sind, das ein oder mehrere Ethylen-Säure-Copolymere und/oder deren Ionomere aufweist.

3. Mehrfilmstruktur nach einem der vorhergehenden Ansprüche, bei der das eine oder die mehreren Ethylen-Säure-Copolymere und/oder deren Ionomere des mindestens einen flexiblen Trennwandfilms unter einem oder mehreren der folgenden ausgewählt werden: Ethylen-Acrylsäure-Copolymer; Ethylen-Methacrylsäure-Copolymer; und Ionomere des Ethylen-Acrylsäure-Copolymers oder Ethylen-Methacrylsäure-Copolymers.

4. Mehrfilmstruktur nach einem der vorhergehenden Ansprüche, bei der die mindestens eine äußere Schicht ein Polymerflm, eine Papierschicht, eine Pappe, eine Metallfolie oder ein Netz ist.

5. Mehrfilmstruktur nach einem der vorhergehenden Ansprüche, bei der die mindestens eine äußere Schicht aus einer Mehrschichtstruktur besteht.

6. Mehrfilmstruktur nach Anspruch 5, bei der die Mehrschichtstruktur eine Gassperrschicht aufweist.

7. Mehrfilmstruktur nach einem der vorhergehenden Ansprüche, die zwei äußere Schichten und von einem bis fünfzehn flexible Trennwandfilme aufweist, die schichtartig dazwischen angeordnet sind.

8. Mehrfilmstruktur nach einem der vorhergehenden Ansprüche, bei der der mindestens eine Trennwandfilm und die mindestens eine äußere Schicht mittels Streifen aus Klebstoffmaterial miteinander verbunden sind.

9. Mehrfilmstruktur nach Anspruch 8, bei der die Streifen von 1 mm bis 10 mm breit und mit einem Abstand zwischen einander von 12 mm bis 50 mm positioniert sind.

10. Mehrfilmstruktur nach einem der vorhergehenden Ansprüche, bei der einer oder mehrere der Trennwandfilme eine Perforation aufweist.

11. Mehrfilmstruktur nach einem der vorhergehenden Ansprüche, bei der die Zellen im Wesentlichen in einer Wabenstruktur angeordnet sind.

12. Mehrfilmstruktur nach einem der vorhergehenden Ansprüche, bei der die Zellen eine Abmessung von zwischen 15 mm und 100 mm aufweisen.

13. Umhüllungsstruktur aus der Mehrfilmstruktur, die in einem jeden der Ansprüche 1 bis 12 beschrieben wird.

14. Verwendung einer Mehrfilmstruktur nach einem der vorhergehenden Ansprüche für eine Verpackungsisolierung, wie beispielsweise eine Verpackungsisolierung von verderblichen Produkten, eine textile Isolierung, Isolierungsmittel für den Transport, Isoliereinrichtungen für industrielle, kommerzielle oder landwirtschaftliche Verwendungen, Bauausführungsmaterialien, Isoliereinrichtungen für Wohnzwecke und Isolierklimakonditionieranlagen.

15. Verfahren zur Herstellung der Mehrfilmstruktur nach einem der Ansprüche 1 bis 13, das die folgenden Schritte aufweist:
a) Bereitstellen eines flexiblen Trennwandfilms, der mindestens eine thermoplastische Schicht aus einem oder mehreren Ethylen-Säure-Copolymeren und/oder deren Ionomeren umfasst, wobei der flexible Trennwandfilm außerdem eine Metall- oder Metalloxidschicht aufweist, die auf der mindestens einen thermoplastischen Schicht abgelagert ist;
b) Bereitstellen einer äußeren Schicht;
c) Zusammenbringen des flexiblen Trennwandfilms und der äußeren Schicht;
d) Extrudieren eines Klebstoffmaterials in Form von Streifen auf den flexiblen Trennwandfilm und die äußere Schicht auf den jeweiligen Seiten, die einander gegenüberliegen; und
e) Streifenlaminieren des flexiblen Trennwandfilms und der äußeren Schicht mittels des Klebstoffmaterials.

## Revendications

1. Structure multi-films, comprenant :
a) au moins un film déflecteur flexible, englobant au moins une couche thermoplastique composée d'un ou de plusieurs copolymères d'acide-éthylène et/ou des ionomères de ceux-ci, le film déflecteur flexible comprenant en outre une couche de métal ou d'oxyde métallique déposée sur la au moins une couche thermoplastique ; et
b) au moins une couche externe ;
le au moins un film déflecteur et la au moins une couche externe étant reliés l'un à l'autre par l'intermédiaire d'un matériau adhésif au niveau d'emplacements prédéterminés et sélectifs, de sorte à former des cellules dans la structure multi-films.

2. Structure multi-films selon la revendication 1, dans laquelle le au moins un film déflecteur et la au moins une couche externe sont reliés l'un à l'autre par l'intermédiaire d'un matériau adhésif comprenant un ou plusieurs copolymères d'acide-éthylène et/ou des ionomères de ceux-ci.

3. Structure multi-films selon l'une quelconque des revendications précédentes, dans laquelle l'un ou les plusieurs copolymères d'acide-éthylène et/ou des ionomères de ceux-ci du au moins un film déflecteur flexible sont choisis parmi un ou plusieurs des copolymères ci-dessous : un copolymère d'acide acrylique- éthylène, un copolymère d'acide méthacrylique-éthylène et des ionomères du copolymère d'acide acrylique-éthylène ou du copolymère d'acide méthacrylique-éthylène.

4. Structure multi-films selon l'une quelconque des revendications précédentes, dans laquelle la au moins une couche externe est un film polymère, une couche de papier, un carton, une feuille métallique ou un filet.

5. Structure multi-films selon l'une quelconque des revendications précédentes, dans laquelle la au moins une couche externe est composée d'une structure multicouches.

6. Structure multi-films selon la revendication 5, dans laquelle la structure multicouches comprend une couche de barrière contre les gaz.

7. Structure multi-films selon l'une quelconque des revendications précédentes, comprenant deux couches externes et de un à quinze films déflecteurs flexibles agencés en sandwich entre elles.

8. Structure multi-films selon l'une quelconque des revendications précédentes, dans laquelle le au moins un film déflecteur et la au moins une couche externe sont reliés l'un à l'autre par l'intermédiaire de bandes de matériau adhésif.

9. Structure multi-films selon la revendication 8, dans laquelle les bandes ont une largeur comprise entre 1 mm et 10 mm et sont positionnées à une distance de 12 mm à 50 mm les unes des autres.

10. Structure multi-films selon l'une quelconque des revendications précédentes, dans laquelle un ou plusieurs des films déflecteurs comprennent une perforation.

11. Structure multi-films selon l'une quelconque des revendications précédentes, dans laquelle les cellules sont agencées pratiquement dans une structure en nid d'abeilles.

12. Structure multi-films selon l'une quelconque des revendications précédentes, dans laquelle les cellules ont une taille comprise entre 15 mm et 100 mm.

13. Structure d'enveloppe produite à partir de la structure multi-films selon l'une quelconque des revendications 1 à 12.

14. Utilisation d'une structure multi-films selon l'une quelconque des revendications précédentes pour l'isolation d'emballages, par exemple l'isolation d'emballages de produits périssables, l'isolation textile, un moyen d'isolation pour le transport, des dispositifs d'isolation pour utilisation industrielle, commerciale ou agricole, des matériaux de construction de bâtiments, des dispositifs d'isolation pour utilisation domestique et l'équipement d'isolation pour la climatisation.

15. Procédé de préparation de la structure multi-films selon l'une quelconque des revendications 1 à 13, comprenant les étapes ci-dessous :
a) fourniture d'un film déflecteur flexible englobant au moins une couche thermoplastique composée d'un ou de plusieurs copolymères d'acide-éthylène et/ou des ionomères de ceux-ci, le film déflecteur flexible comprenant en outre une couche de métal ou d'oxyde métallique déposée sur la au moins une couche thermoplastique ;
b) fourniture d'une couche externe ;
c) rapprochement du film déflecteur flexible et de la couche externe ;
d) extrusion d'un matériau adhésif sous forme de bandes sur le film déflecteur flexible et sur la couche externe, sur les côtés respectifs de ceux-ci qui se font face ; et
e) stratification par bandes du film déflecteur flexible et de la couche externe par l'intermédiaire du matériau adhésif.
